Europäisches Patentamt

European Patent Office

Office européen des brevets

(19)

(11) Publication number: **0 172 980**
**B1**

## (12) EUROPEAN PATENT SPECIFICATION

(45) Date of publication of patent specification: **07.12.88**

(51) Int. Cl.⁴: **G 06 F 9/44**

(21) Application number: **84850253.0**

(22) Date of filing: **31.08.84**

(54) **An arrangement for the generation of information and/or an instruktion intended for input to the program memory of a computer.**

(43) Date of publication of application:
**05.03.86 Bulletin 86/10**

(45) Publication of the grant of the patent:
**07.12.88 Bulletin 88/49**

(84) Designated Contracting States:
**AT BE CH DE FR GB IT LI NL SE**

(56) References cited:
**EP-A-0 116 694**
**DE-A-2 923 427**

**SOFTWARE AND MICROSYSTEMS, vol. 1, no. 1, October 1981, pages 13-20, Camberley, Surrey, GB; P.W. DELL et al.: "Computer-aided design for software"**

**IEEE TRANSACTIONS ON SOFTWARE ENGINEERING, vol. SE-8, no. 1, January 1982, pages 1-12, IEEE, New York, US; R.C. WATERS: "The programmer's apprentice: knowledge based program editing"**

**IEEE INTERNATIONAL CONFERENCE ON CIRCUITS AND COMPUTERS 1982, pages 500-502, IEEE, New York, US; J.A. WISNIEWSKI: "Aids for VLSI design entry and partitioning"**

(73) Proprietor: **Katzeff, Kurt**
**Televerkets Huvudkontor Fack**
**S-123 86 Farsta (SE)**

(72) Inventor: **Katzeff, Kurt**
**Televerkets Huvudkontor Fack**
**S-123 86 Farsta (SE)**

(74) Representative: **Karlsson, Berne**
**Televerkets Huvudkontor Patent Department**
**Fack**
**S-123 86 Farsta (SE)**

Courier Press, Leamington Spa, England.

## Description

### Technical field

The present invention relates to an arrangement for generating a supplementary instruction intended for input to the program memory of a computer, and especially to the program memory of a computer which is either itself part of a telephone system or which controls a telephone system.

It is further assumed that a computer for this special application is arranged to control subscriber connection and operation of an automatic telephone exchange in accordance with received control signals and the instructions in a program memory.

### Background art

It is known that automatic telephone exchanges can make use of computers which are so arranged as to control subscriber connections and the operation of said telephone exchange, including various service functions, for example recall or interception facilities. An example of such an automatic telephone exchange is the digital system AXE 10 jointly developed by Televerket and L. M. Ericsson.

In addition, it is known that for automatic exchanges a computer could be arranged to take over the control functions for making subscriber connections in operation of the telephone exchange.

Moreover, it is known, by various means, to change the content of a computer program memory whilst the exchange is in operation, in order to introduce various additional services, change the switching sequences in the exchange, etc.

In Software and Microsystems, Vol 1, No. 1, October 1981 there is published an article "Computer-aided design for software" by P. W. Dell et al, which discloses the development of a CADOS system, i.e. a system for computer-aided design of software. The key element of this system is a graphical language called SX1. It is based on flowcharts. It provides sophisticated computer-aided facilities for the production of such charts and at the same time automatically translates the documents into high-level source code. The system uses an interactive graphics technique so that the software engineer may "draw" his programs on the screen of a visual display unit VDU. The simulation of a program at chart level is projected.

From EP—A—0 116 694 there is known a method of dynamically adding/changing (configuration changing) input/output devices in a data system, essentially in accordance with the preamble of claim 1. This reference describes an arrangement which by means of usage of the structure description of a system and a number of instructions produces a program for a new system. This kind of tool (appliance) is normally mentioned as system synthesizing appliance.

### Technical problems

The use of automatic computer-based telephone systems and the requirement for including additional services, for example automatic recalling facility, staff location system for certain or all subscribers etc., has shown that there are two different but related problems.

The first problem is to create conditions leading to the production of a correct program instruction or sequence of instructions, i.e. a program instruction which is input to the program memory to give the required function, or the additional service, without adversely affecting existing and desirable functions.

The second problem is to confirm in advance that existing or available equipment used in the telephone system has both the capacity and capability to perform these desirable functions and/or additional services. If it is discovered that existing equipment cannot perform these desirable functions it becomes a technical problem to simply establish where and to what extent the equipment needs to be supplemented.

Practical experience obtained in the operation of previous computer-controlled telephone stations and systems has unequivocally shown that skilled solutions of technical problems are required to create conditions such that a program instruction correctly adapted to the system can be input to the computer's program memory, such that the computer can control the making of connections and the operation of the automatic telephone exchange according to the desired functions.

It has even been shown that skilled solutions of technical problems are required to create conditions such that a correct and verified program instruction can be input to the computer's program memory so that a change in the telephone exchange's functions can be brought about, for example inclusion of a new service, without adversely affecting existing and desirable functions.

Furthermore, it has been shown that skilled solutions of technical problems are required to create conditions such that it can be simply and rapidly determined if existing equipment or newly developed equipment has the capability and capacity to perform desired functions and/or services, and if not also establish where and how the equipment needs to be supplemented.

Thus it has been shown that there are considerable problems associated partly with the creation of specification which in itself is correct and error-free, and partly with the creation of a specification which has the physical capabilities to be performed both by existing devices and by those devices forming part of the automatic telephone exchange.

It has been found to be extremely time-consuming to first set up a certain specification of requirements, verify that the specification itself is correct, input to the program memory instructions corresponding to the specification and then, by means of practical switching tests, to establish to what extent the automatic telephone exchange can perform according to the new specification.

Solution

The present invention is an arrangement for generating a supplementary instruction for input to a program memory of a computer and which computer is so arranged that, depending on the contents of the program memory and depending on control signals received, it controls switchings in and operations of a system, for example an automatic telephone exchange; the supplementary instruction being caused by the demand of implementation of a new or amended function in the system.

With the intention of solving the above-mentioned technical problems, the present invention comprises: a manually actuateable information generator, which receives a specification, for example an SDL specification of the mentioned new or amended function and transforms the mentioned specification to a first code, for example to an SDL code; a data base storing rules, definitions and tables relative to said first code used in the information generator; a first processing device by means of the contents of the information generator and the mentioned data base generating a structural information on a function block level; second processing devices further breaking down the mentioned structural information by defining boundary conditions between the function blocks and generating a first information of the new or amended function described on a detailed data level; checking devices being adapted to check the process of designing the mentioned first information in relation to the content of the mentioned data base; a first storing device storing the mentioned first information about the new or amended function; second storing devices storing a second information including rules, definitions and tables of the system, a description of the system described on function block and detailed data level, and a description of the functions which can be carried out by the system before the entering of the new or amended function in the system; an information processing unit in dependence of the mentioned first and second informations generating a third information which is related to the mentioned supplementary instruction necessary to allow the system to work with the new or amended function; and a compiler transforming the obtained third information to a second code, for example to an intermediate programming language (PLEX, CHILL, etc), before entering of said second code, representing the supplementary instruction, into the program memory.

The invention also shows how the manually actuateable information generator generates information transformable from a requirement specification and coded to the first code, said information constituting a base document. A checking device is arranged to check, preferably automatically, the correctness of the contents of this base document by comparing the contents of the base document with the contents of said data base, and to produce information relating to possible errors and possibly even together with information relating to corrections.

The checking device can, advantageously, even comprise the storage of and read-out of the information content.

Moreover, it is suggested that the output signal from the information processing unit is connected to a control unit and/or a simulator unit, whose output is connected to a compiler arrangement, to transform the flow of information to a program information in one or more program languages.

Said program information is consequently transferred to the compiler's program memory.

Furthermore, the arrangement according to the invention advantageously automatically synthesizes and generates in dependence of said third information a documentation of information necessary for designing VLSI circuits to be included in the system and documentation of software and hardware in the new or amended form.

Advantages

Those advantages which can be considered as characteristic for the arrangement of the present invention are that it becomes possible to establish in advance whether a requirement specification as laid down is correctly formulated and programmed and whether those devices comprising the equipment or the automatic telephone exchange can carry out said specification. This check can be carried out before program information is input to the computer's program memory of the automatic telephone exchange and before the telephone exchange is allowed to function according to the new specification.

That which can be considered most characteristic for this invention is given in claim 1 of the attached patent claims.

Brief description of the enclosed diagram

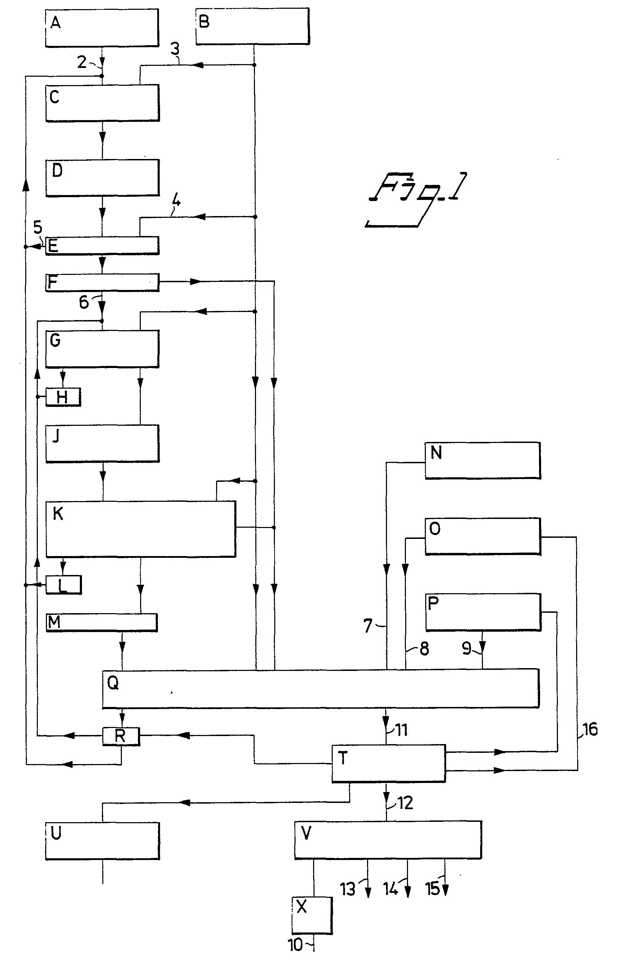

An arrangement, as presently proposed, for generating information and/or instructions intended for input to the program memory of a computer arranged to control subscriber connections and the operation of an automatic telephone exchange, will be more specifically described by reference to the enclosed drawing in which, the figure is a flow diagram indicating the principles according to the invention.

Description of the proposed embodiment

The attached figure is a flow diagram which indicates the significant properties associated with this invention.

The method of the flow diagram shown in said figure is intended to generate information and/or an instruction or instruction sequence for input to a computer's program memory.

The computer according to the proposed embodiment is arranged to control subscriber's connections and the operation of an automatic telephone exchange in accordance with received control signals and instructions in the program memory.

It should be noted that the invention is not restricted to a computer controlled telephone exchange but includes all forms of coordination between a given specification and the physical properties of any mechanical and/or electromechanical arrangement.

The proposed embodiment utilizing a computer with a program memory is thus an example where the specific application is the control of an electronic telephone exchange by the computer.

For the example of the electronic telephone exchange, a number of well defined requirements is valid, all of which are listed in the so-called requirement specification. One such specification could be:

a) receive an incoming call to a subscriber,

b) establish whether the subscriber's telephone is positioned in the interception mode or not,

c) if not, move to "e",

d) if so, connected to the directed number,

e) connect the ring signal generator, etc.

This and other specifications, which are to be included in the system can be described in coded form, for example in CCITT's specification and description language SDL. Comments can be included with such a description for the sake of completeness to avoid ambiguity.

The coded description (with comments) constitutes a release document which may be used for all further construction work relating to that specific function. The document can also be used for final approval and testing of the function.

By means of a manually influenced information generator "A", information coded according to the specification is produced. The information generator can be designed to work with SDL information (Specification and Description Language).

The information is transferred over line 2 to an information processing unit or circuit "C".

Besides the information generator "A", there is also an auxiliary device "B", in which significant rules, definitions and tables are stored relative to the language or code used. All of these should be input and stored in device "B".

Under the control of the rules, etc. which are stored in "B", and which are transferred along the line 3, the base document's contents are created on line 2 using information from the information generator "A", whose information is combined in an information processing unit or circuit "C".

The circuit "C", provides for a rearrangement of the contents in "A" and the rules in "B" such that the function is allocated a number of function blocks. These function blocks give a more detailed description of the specification than the one in "A". In addition, a check may be performed to ensure that the information input follows the requirements (from "A") and rules (from "B").

The input into and processing in "C" results in a systematic description at block level in the given code, for example an SDL code of the function input. Information can be manually input to the device "C", if this information need not be evident from the information obtained from "A". This system description is transferred to device "D", in which the boundary conditions are given, its various blocks, boundary conditions between these blocks, etc.

The result output from device "D" is connected to a control circuit "E", where the information is automatically checked against the requirements and the rules in device "B" via line 4 such that no errors exist which deviate from the rules in "B". If an error is detected, a manual intervention is made and the process is repeated via line 5 from "C".

After being formally approved in "E", the function's block description is fed into a data base "F" for the local application system. In the data base it is noted that the block descriptions and that it is not integrated into the overall system. The information is now transferred, via line 6, to a device "G" which can give a detailed description and cause the blocks to be broken down into a predetermined code.

The function's various blocks are abstracted from a data base, broken down and described in detail according to the rules and conditions given in device "B".

It may be that it is not possible to automatically carry out the detailed descriptions according to device "G". Furthermore, it may be that there are a number of equally valid detailed solutions. In both cases, a manual intervention via device "H" is required. The additional information introduced by this means is documented and is regarded as a part of "A". After the manual intervention, the processing in "G" is repeated and the cycle "G"—"H"—"G" is followed until no manual intervention is necessary.

The output information from the process "G"—"H"—"G" is documented in device "J" in the form of detailed block descriptions in a given code. The descriptions must be complete and must also contain complete interfaces between the internal sub-functions in each block.

Those detailed block descriptions which were obtained by processing in device "J" are checked first formally and then structurally by device "K". After both these checks, changes are automatically made by device "K". Interfaces are also checked and changed automatically. In order that this can be done, all the information from device "B" and the description of the function according to device "D", which is stored in the data base according to device "F", is required. With the help of the latter information the function is simulated.

Errors can occur during the various checking and simulation procedures in the device "K" and these cannot be changed automatically. In such cases a manual intervention via device "L" is necessary. The manual intervention can lead to changes having to be made in either the detailed description in device "G", or the superior function description in device "C". This means that the process must restart either from device "G" or from device "C". All new input information is documented. The cycles "K"—"L"—"G" and "K"—"L"—"C" . . . "K" are followed until manual intervention according to device "L" is not necessary.

The output function from the systems "K"—"L"—"G" . . . "K" and "K"—"L"—"C" . . . "K" is stored in a data base "M" for the application system. It is noted that the detailed function descriptions have not been integrated into the overall system.

Rules, tables, definitions and the like which are appropriate for the proper functioning of the particular system are input to device "N".

The system, in which the particular function is a part, has its own rules and definitions which lead to limitations or more precisely clarifications of the coded rules and definitions. These rules are input to the data system for use when the desired functions have been defined in general terms.

The device "O" contains a description of the system at block and detail level.

The system, in which the particular function is to become a part, must be described to the data system according to the rules given in device "B" and with the clarifications given in device "N". The description includes system structure and hardware properties.

A description of functions which the system is capable of carrying out is input to device "P".

All the functions which have already been created for the particular system must be described in and input to the data system according to the rules given in devices "B" and "N". Interfaces and cooperative requirements between functions must also be given. The information in devices "N", "O" and "P" constitutes a complete description of the particular system before the new particular function has been input.

Additions of new functions and blocks to the system are arranged via the device "Q". A particular function being created is transferred from the data base where it was stored to the device "M". By means of information in device "N" the description is clarified such that it is compatible with the system described in device "O" and with the existing functions described in device "P".

A manual intervention in device "R" can be required during the process in device "Q" and during checking the device "T". In order that this can be carried out in the correct manner new information must be input either from device "C" or from device "G". The process in device "Q" and the checking in device "T" are not complete until manual intervention is no longer necessary.

Via device "T", a formal check and an automatic change, a structural check and an automatic change, an interface check and an automatic change or a simulation and an automatic change take place here.

This checking process is independent of device "Q", and checks that the result from device "Q" satisfies the formal requirements in devices "B" and "N", the structural requirements in devices "A" ("C") and "O" together with the interface requirements in device "P". It is also possible for the process to automatically input changes or request manual intervention at device "R". Simulation is included in the checking process. After the simulation is approved, the new function is available and described in SDL, and is stored in device "P". If necessary, structural additions can be made in device "O".

The process in device "Q" and the checking in device "T" can result in new hardware blocks being specified. This affects the system structure in device "O" and generates in device "U" the need for construction information which must be able to be used as input information for an automatic construction process for so-called VLSI-circuits. This takes place in device "U".

Compiling to a suitable intermediate language can take place via a device "V".

The machine is probably not built for the code used. The code described and the encoded functions must therefore be compiled to a suitable intermediate language, for which a compiler compatible with the machine code exists. Examples of such intermediate languages are PLEX, CHILL, Pascal and ADA.

Compiling to the particular machine code can take place via device "X".

This is a trivial compilation of all programs in the system from some intermediate language according to device "V" to the particular machine code.

Coded information, representing the states which can be assumed by the various devices in the automatic telephone exchange, are fed into an information handling unit or device "Q" via lines 7, 8 and 9.

The information processing unit or device "Q" can advantageously contain a processor and is arranged such that, depending partly on the information on line 2 encoded by the specification, and partly on the information on lines 7, 8 and 9 encoded by the conditions (states), it calculates the information and/or the instruction which must be input to the computer's program memory such that automatic telephone exchange can function according to the stored specification. The information which must be input to the computer's program memory appears on line 10.

It is evident that device "K" can advantageously contain or include devices for storage of information signals for read-out and transmission.

The encoded information relating to those conditions (states), preferably all such conditions, which can be assumed by all devices comprising the automatic telephone exchange can advantageously be stored in a memory device which includes the devices "N", "O" and "P".

Encoded information relating to those functions, preferably all such functions, which can be carried out by the devices comprising the automatic telephone exchange, can advantageously be stored in a memory which includes the devices "N", "O" and "P".

The output signal from the information processing unit "Q" is fed via line 11 into a checking and/or simulation unit "T".

The output signal from the checking and/or simulation unit "T" is connected directly via line 12 to a compiler arrangement "V" to transfer or reform the information flow on line 12 to a program operation based on one or more languages, where the program operation according to a first program language takes place via a line 13, a program operation by means of a second program language via line 14, etc.

It is possible, by means of line 16, to allow the output signals from unit "T" to be transmitted to devices "N", "O" and "P" and by such means obtain a check on how the output signal effects the automatic telephone exchange.

There are a number of design directions within the framework of this invention. This can be appropriate to allow function structuring to be separated with its own dedicated data operation and serve as a unit.

The invention is naturally not limited to the example described but can be modified within the framework of the following patent claims.

**Claims**

1. An arrangement for generating a supplementary instruction for input to a program memory of a computer and which computer is so arranged that, depending on the contents of the program memory and depending on control signals received, it controls switchings in and operations of a system, for example an automatic telephone exchange; the supplementary instruction being caused by the demand of implementation of a new or amended function in the system, characterized in;

a) that a manually actuateable information generator (A) receives a specification, for example a SDL-specification, of the mentioned new or amended function and transforms the mentioned specification to a first code, for example to a SDL-code,

b) that a data base (B) stores rules, definitions and tables relative to said first code used in the information generator,

c) that a first processing device (C) by means of the contents of the information generator (A) and the mentioned data base (B) generates a structural information on a function block level,

d) that second processing devices (D, G, J) further break down the mentioned structural information by defining boundary conditions between the function blocks and generating a first information of the new or amended function described on a detailed data level,

e) that checking devices (E, K) are adapted to check the process of designing the mentioned first information in relation to the content of the mentioned data base (B),

f) that a first storing device (M) stores the mentioned first information about the new or amended function,

g) that second storing devices (N, O, P) store a second information including rules, definitions and tables (N) of the system, a description of the system described on function block and detailed data level (O), and a description of the functions (P) which can be carried out by the system before the entering of the new or amended function in the system.

h) that an information processing unit (Q) in dependence of the mentioned first and second informations generates a third information which is related to the mentioned supplementary instruction necessary to allow the system to work with the new or amended function, and

i) that a compiler (V) transforms the obtained third information to a second code, for example to an intermediate programming language (PLEX, CHILL, etc), before entering of said second code, representing the supplementary instruction, into the program memory.

2. An arrangement according to Claim 1 characterized in that, by means of the manually actuateable information generator (A), it generates information transformable from a requirement specification and coded to the first code, said information constituting a base document, that a first checking device (E) is arranged to check, preferably automatically, the correctness of the contents of this base document by comparing the contents of the base document with the contents of said data base (B), and that the first checking device (E) is arranged to produce information relating to possible errors and possibly even together with information relating to corrections.

3. An arrangement according to Claim 2 characterized in that the first checking device (E) for checking the correctness also includes a storage of and transmission of information content.

4. An arrangement according to any one of the previous patent claims, characterized in that the information processing unit's (Q) output signal is connected to a checking and/or simulation unit (T).

5. An arrangement according to Claim 4, characterized in that the checking and/or simulation unit's (T) output is connected to said compiler (V) in order to transform an information flow to one of several program languages.

6. An arrangement according to any one of the previous claims, characterized in that it automatically synthesizes and generates (U) in dependence of said third information a documentation of information necessary for designing VLSI-circuits to be included in the system.

7. An arrangement according to any one of the previous claims, characterized in that it automatically synthesizes (T, O, P) in dependence of said third information a documentation of software and hardware in the new or amended form.

8. An arrangement according to any one of the previous claims, characterized in that it is adapted (H, L, R) for imputting of further manual information during the designing process of the mentioned first and third informations.

**Patentansprüche**

1. Anordnung zum Erzeugen einer zusätzlichen Instruktion zur Eingabe in einen Programmspeicher eines Computers, welcher derart ausgebildet ist, dass er in Abhängigkeit vom Inhalt des Programmspeichers und von den empfangenen Steuersignalen Schaltungen in einem System und den Betrieb dieses Systems, beispielsweise einer automatischen Telefonzentrale, steuert, wobei die zusätzliche Informationen vom Bedarf eines Zubehörs einer neuen oder geänderten Funktion im System abhängt, dadurch gekennzeichnet, dass

a) ein manuell betätigbarer Generator (A) eine Spezifikation, beispielsweise eine SDL-Spezifikation, der genannten neuen oder geänderten Funktion empfängt und diese Funktion in einen ersten Code, beispielsweise einem SDL-Code, umwandelt,

b) eine Datenbasis (B) Regel, Definitionen und Tabellen speichert, die sich auf den ersten Code beziehen und im Informationsgenerator verwendet werden,

c) ein erstes Verarbeitungsgerät (C) mittels des Inhalts des Informationsgenerators (A) und der genannten Datenbasis (B) eine strukturelle Information an einem Funktionsblockpegel erzeugt,

d) zweite Verarbeitungsgeräte (D, G, J) ferner die genannte strukturelle Information durch Definition der Grenzbedingungen zwischen den Funktionsblöcken zerlegen und eine erste Funktion der neuen oder geänderten Funktion erzeugen, die an einem detaillierten Datenpegel beschrieben sind,

e) Kontrollgeräte (E, K) für das Verfahren zur Auslegung der genannten Information im Verhältnis zum Inhalt der genannten Datenbasis (B) ausgebildet sind,

f) ein erstes Speichergerät (M) die genannte, erste Information über die neue oder geänderte Funktion speichert,

g) zweite Speichergeräte (N, O, P) eine zweite Information, einschliesslich Regel, Definitionen und Tabellen (N) des Systems, eine Beschreibung des Systems am Funktionsblock und detaillierte Datenpegel (O), sowie eine Beschreibung der Funktionen (P) speichert, die vom System vor dem Eintritt der neuen oder géänderten Funktion in das System ausgeführt wird,

h) eine Informationen bearbeitende Einheit (O), in Abhängigkeit von der genannten ersten und der zweiten Information, eine dritte Information erzeugt, welche sich auf die genannte Zusatz-Information bezieht und notwendig ist, damit das System mit der neuen oder geänderten Funktion arbeiten kann, und

i) ein Umwandler (V) die erhaltene dritte Information in einen zweiten Code, beispielsweise in eine Zwischenprogrammiersprache (PLEX, CHILL, etc.), umwandelt, bevor der genannte, zweite Code, der die Zusatz-Instruktion darstellt, in den Programmspeicher eingegeben wird.

2. Anordnung nach Anspruch 1, dadurch gekennzeichnet, dass sie mittels des manuell betätigbaren Informationsgenerators (A) in eine von einer erforderlichen Spezifikation und in einen ersten Code kodierte Information umwandelbar ist, wobei diese Information ein Basisdokument darstellt, dass ein erstes Kontrollgerät (E) für eine vorzugsweise automatische Kontrolle des Inhalts dieses Basisdokuments durch Vergleich des Inhalts des Basisdokuments mit demjenigen der Datenbasis (B) vorgesehen ist, und dass das erste Kontrollgerät (E) zur Erzeugung von Informationen bezüglich mögliche Fehler und sogar möglicherweise zusammen mit Informationen für Korrekturen vorgesehen ist.

3. Anordnung nach Anspruch 2, dadurch gekennzeichnet, dass das erste Kontrollgerät (8) für die Richtigkeit auch einen Speicher und eine Austrahlung von Informationsinhalt einschliesst.

4. Anordnung nach einem der vorangehenden Ansprüche, dadurch gekennzeichnet, dass das Ausgangssignal der Informationsverarbeitungseinheit (O) mit einer Kontroll- und/oder Simulierungseinheit (T) verbunden ist.

5. Anordnung nach Anspruch 4, dadurch gekennzeichnet, dass der Ausgang der Kontroll- und/oder Simulierungseinheit (T) mit dem genannten Umwandler (V) verbunden ist, um einen Informationsfluss zu einer von mehreren Programmsprachen auszustrahlen.

6. Anordnung nach einem der vorangehenden Ansprüche, dadurch gekennzeichnet, dass sie, abhängig von der genannten dritten Information, automatisch eine Dokumentation von Informationen zusammensetzt und erzeugt (U), die zur Auslegung der VLSI-Stromkreise für das System notwendig sind.

7. Anordnung nach einem der vorangehenden Ansprüche, dadurch gekennzeichnet, dass sie automatisch, abhängig von der genannten dritten Information, Software und Hardware in der neuen oder geänderten Form zusammensetzt (T, O, P).

8. Anordnung nach einem der vorangehenden Ansprüche, dadurch gekennzeichnet, dass sie zur Eingabe von weiteren manuellen Informationen während des Auslegungsverfahrens der ersten und dritten Information ausgelegt (H, L, R) ist.

**Revendications**

1. Dispositif pour la génération d'une instruction supplémentaire à entrer dans une mémoire de programme d'un ordinateur, cet ordinateur étant prévu de sorte que, en fonction du contenu de la mémoire de programme et en fonction de signaux de commande reçus, il commande les commutations et les opérations d'un système, par exemple un central téléphonique automatique, l'instruction supplémentaire étant due à la demande de réalisation d'une fonction nouvelle ou modifiée dans le système, caractérisé en ce que:

(a) un générateur d'information actionnable manuellement (A) reçoit une spécification, par exemple une spécification SDL, de la fonction nouvelle ou modifiée mentionnée et transforme la spécification mentionnée en un premier code, par exemple en un code SDL,

(b) une base de données (B) stocke des règles, des définitions et des tables relatives audit premier code utilisé dans le générateur d'information,

(c) un premier dispositif de traitement (C) génère, par utilisation du contenu du générateur d'information (A) et de la base de données mentionnées (B), une information structurelle, à un niveau de blocs fonctionnels,

(d) des deuxièmes dispositifs de traitement (D, G, J) décomposent davantage l'information structurelle mentionnée, par définition de conditions de limite entre les blocs fonctionnels et génération d'une première information de la fonction nouvelle ou modifiée, décrite à un niveau de données détaillées,

(e) des dispositifs de vérification (E, K) sont prévus pour vérifier le traitement de détermination de la première information mentionnée par rapport au contenu de la base de données mentionnée (B),

(f) un premier dispositif de mémoire (M) stocke la première information mentionnée relative à la fonction nouvelle ou modifiée,

(g) des deuxièmes dispositifs de mémoire (N, O, P) stockent une deuxième information comprenant des règles, définitions et tables (N) du système, une description du système décrit à un niveau de blocs fonctionnels et de données détaillées (O), et une description des fonctions (P) qui peuvent être exécutées par le système avant l'introduction de la fonction nouvelle ou modifiée dans le système,

(h) une unité de traitement d'information (Q) génère, en fonction des première et deuxième informations mentionnées, une troisième information qui est liée à l'instruction supplémentaire mentionnée, nécessaire pour permettre au système de travailler avec la fonction nouvelle ou modifiée, et

(i) un compilateur (V) transforme la troisième information obtenue en un deuxième code, par exemple en un langage de programmation intermédiaire (PLEX, CHILL, etc.), avant l'introduction dudit deuxième code, représentant l'instruction supplémentaire, dans la mémoire de programme.

2. Dispositif suivant la revendication 1, caractérisé en ce que, au moyen du générateur d'information actionnable manuellement (A), il génère une information transformable à partir d'une spécification de demande et codée en ledit premier code, ladite information constituant un document de base, en ce qu'un premier dispositif de vérification (E) est prévu pour vérifier, de préférence automatiquement, l'exactitude du contenu de ce document de base par comparaison du contenu du document de base avec le contenu de ladite base de données (B), et en ce que le premier dispositif de vérification (E) est prévu pour produire une information relative à des erreurs possibles et même éventuellement en même temps une information relative aux corrections.

3. Dispositif suivant la revendication 2, caractérisé en ce que le premier dispositif de vérification (E), pour vérifier l'exactitude, comprend également un stockage et une transmission du contenu de l'information.

4. Dispositif suivant l'une quelconque des revendications précédentes, caractérisé en ce que le signal de sortie de l'unité de traitement d'information (Q) est envoyé à une unité (T) de vérification et/ou de simulation.

5. Dispositif suivant la revendication 4, caractérisé en ce que la sortie de l'unité (T) de vérification et/ou de simulation est connectée audit compilateur (V) afin de transformer un flux d'information en l'un de plusieurs langages de programme.

6. Dispositif suivant l'une quelconque des revendications précédentes, caractérisé en ce qu'il synthétise automatiquement et génère (U), en fonction de ladite troisième information, une documentation d'information nécessaire pour la conception de circuits à intégration à très grande échelle à inclure dans le système.

7. Dispositif suivant l'une quelconque des revendications précédentes, caractérisé en ce qu'il synthétise automatiquement (T, O, P), en fonction de ladite troisième information, une documentation de logiciel et de matériel dans la forme nouvelle ou modifiée.

8. Dispositif suivant l'une quelconque des revendications précédentes, caractérisé en ce qu'il est adapté (H, L, R) pour l'introduction d'autres informations manuelles pendant le traitement de détermination des première et troisième informations mentionnées.

EP 0 172 980 B1

Fig.1